# FASCICULE DE BREVET EUROPEEN

(11) **EP 2 525 070 B1**
(45) Date de publication et mention de la délivrance du brevet: **21.02.2018**
(21) Numéro de dépôt: 12290156.4
(22) Date de dépôt: 09.05.2012
(51) Int. Cl.: F02K 7/08, F02K 7/10

(54) **Statoréacteur à chambre de détonation et engin volant comprenant un tel statoréacteur**
Staustrahltriebwerk mit Detonationskammer sowie Fluggerät umfassend ein derartiges Staustrahltriebwerk
Ramjet engine with detonation chamber and aircraft comprising such a ramjet engine

(30) Priorité: 16.05.2011 FR 1101485
(43) Date de publication de la demande: 21.11.2012
(73) Titulaire: MBDA France, 92350 Le Plessis-Robinson (FR)
(72) Inventeur: Falempin, François, 78370 Saint Arnoult (FR); Le Naour, Bruno, 18000 Bourges (FR)
(74) Mandataire: Gevers & Orès

(56) Documents cités:
- FR-A- 1 007 027
- FR-A- 1 012 068
- US-A- 3 040 516
- US-A- 3 604 211
- US-A- 3 727 409
- US-A- 3 777 488

## Description

La présente invention concerne les statoréacteurs à chambre de détonation, ainsi que les engins volants, tels que missiles ou analogues, propulsés par de tels statoréacteurs.

On sait que le fonctionnement des statoréacteurs peut reposer sur la mise en oeuvre d'un cycle thermodynamique de détonation au cours duquel la combustion par détonation est effectuée très rapidement dans une épaisseur très faible de mélange détonant, de sorte que ce dernier n'a pas la possibilité temporelle de se dilater. L'augmentation de pression est ainsi limitée.

De tels statoréacteurs peuvent se présenter sous la forme de moteurs à détonation pulsée (également désignés PDE pour « Pulsed Detonation Engine » en anglais), dont le fonctionnement se caractérise par le remplissage d'une chambre de détonation avec un mélange frais détonant combustible-oxydant (l'oxydant étant généralement l'air), puis par l'initiation de la détonation dudit mélange détonant par un apport d'énergie. Une surpression, apparaissant au niveau d'un mur de poussée, est maintenue au cours du déplacement de l'onde de détonation le long de la chambre de détonation, ce qui crée momentanément une poussée. Il faut alors attendre la vidange des gaz chauds issus de la réaction de combustion dans la chambre de détonation, puis son remplissage en mélange frais détonant avant de pouvoir amorcer une nouvelle onde de détonation pour provoquer une nouvelle impulsion de poussée.

Toutefois, la nature pulsée de la poussée obtenue par de tels statoréacteurs (dont la fréquence est généralement comprise entre 50 Hz et 200 Hz) engendre, d'une part, un environnement vibratoire très sévère pour le reste de l'engin volant portant le statoréacteur et nécessite, d'autre part, un apport d'énergie conséquent à chaque cycle pour initier la détonation, ce qui se révèle particulièrement problématique en cas d'utilisation de mélanges combustible-oxydant peu détonants.

Par ailleurs, on connaît par le document FR-1 012 068 qui concerne des perfectionnements apportés à des engins à combustion interne à flux continu, notamment aux moteurs de ce genre pour aérodynes. Ces perfectionnements consistent principalement, en même temps qu'à injecter le combustible, dans le flux traversant l'engin, en amont de la zone de combustible, à agencer les engins de manière à obtenir une vitesse d'écoulement particulière du flux d'air et une pression d'injection particulière.

La présente invention a pour objet de remédier aux inconvénients précités et, notamment, de fournir un statoréacteur aux performances améliorées.

A cette fin, selon l'invention, le statoréacteur fonctionnant avec un mélange détonant combustible-air et comprenant :
- au moins une chambre de détonation qui est équipée, à son extrémité amont, d'un fond d'injection d'air et qui se termine, à son extrémité aval, par une tuyère d'éjection ;
- au moins une entrée d'air reliée à ladite chambre de détonation pour pouvoir l'alimenter en air ; et
- des moyens pour injecter du combustible dans ladite chambre de détonation,
est remarquable :
- en ce que ladite chambre de détonation est annulaire et du type à onde de détonation continue ;
- en ce que lesdits moyens d'injection de combustible sont formés pour injecter, en continu, du combustible directement dans ladite chambre de détonation juste en aval dudit fond d'injection d'air ; et
- en ce que l'injection de combustible et l'injection d'air dans ladite chambre de détonation sont réalisées séparément l'une de l'autre, de façon permanente au cours du fonctionnement dudit statoréacteur.

Ainsi, grâce à l'invention, le statoréacteur à chambre de détonation du type à onde de détonation continue (encore appelé CDWE en anglais pour « Continuous Detonation Wave Engine ») permet d'obtenir - à l'intérieur de la chambre de détonation - une production continue de gaz chauds par des ondes de détonation auto-entretenues.

En effet, le mélange frais détonant est formé en permanence dans la chambre de détonation à son extrémité amont. On peut alors amorcer une onde de détonation par un moyen classique (fil à exploser, tube de prédétonation, etc.). Cette onde se propage circonférentiellement dans le mélange détonant frais, tandis que les gaz chauds qu'elle produit se détendent dans le reste de la chambre de détonation. Comme l'injection de combustible et d'air frais dans la chambre de détonation est permanente, lorsque l'onde de détonation revient à son point de départ, elle rencontre à nouveau du mélange frais détonant combustible-air et poursuit son mouvement circonférentiel qui devient donc continu. Plus précisément, en aval de l'onde de détonation, et après la détente initiale des gaz chauds, une couche de mélange frais se développe qui, parce qu'elle est en contact avec les gaz chauds et sous certaines conditions, provoque l'apparition d'une nouvelle onde de détonation auto-initiée. On obtient ainsi une chambre annulaire de détonation dans laquelle une série d'ondes de détonations circonférentielles défilant à la fréquence de plusieurs kHz (jusqu'à 30 kHz) produit des gaz chauds qui se détendent vers l'extrémité ouverte de la chambre de détonation avant d'être accélérés par la tuyère d'éjection pour obtenir une poussée.

En outre, du point de vue du cycle thermodynamique, la détonation du statoréacteur de l'invention présente un rendement de 15 à 25 % supérieur à celui d'une combustion à pression constante mise en oeuvre dans un moteur à détonation pulsée, ce qui permet notamment de réduire la consommation de combustible à performances équivalentes (l'amélioration de l'efficacité thermodynamique s'accompagnant d'une augmentation très sensible du rendement de combustion) et d'augmenter le plafond de vol.

De plus, le principe de fonctionnement d'un tel statoréacteur pallie le problème de l'environnement vibratoire très sévère engendré par un moteur à détonation pulsée.

On notera également :
- que le statoréacteur de l'invention pourrait se dispenser d'accélérateur intégré soit en réduisant le Mach minimal de fonctionnement (par exemple à Mach 1,2), soit en fonctionnant d'abord en mode anaérobie en consommant un oxydant emporté à bord du véhicule (ce qui correspond à une accélération initiale en mode fusée), puis en basculant dès que possible en mode aérobie ; et
- que, le combustible et l'air étant injectés séparément dans la chambre de détonation, on prévient toute inflammation intempestive en amont de la chambre de détonation. De préférence, le combustible peut être injecté dans la chambre de détonation après avoir été préalablement, au moins partiellement, vaporisé.

De préférence, ledit statoréacteur comprend un système d'injection d'air qui est intercalé entre ladite entrée d'air et ladite chambre de détonation et qui comprend au moins un canal, par exemple sous la forme d'une fente annulaire, débouchant dans ladite chambre de détonation pour l'alimenter en air.

Ainsi, le système d'injection d'air permet une distribution d'air frais - préalablement ralenti pour atteindre une vitesse subsonique - à l'entrée de la chambre de détonation par une ou plusieurs fentes annulaires, tout en assurant un découplage entre l'entrée d'air et la chambre de détonation. Bien entendu, il est également envisageable de prévoir d'autres formes de canaux, pour remplacer les fentes annulaires.

De plus, le statoréacteur de l'invention comprend des moyens pour contrôler localement le débit d'air frais entrant dans ladite chambre de détonation.

Ainsi, en contrôlant localement le débit d'arrivée d'air, par exemple le long de la circonférence de ladite chambre de détonation, il est possible de modifier localement, au sein de ladite chambre, la variation de la richesse du mélange détonant combustible-air en augmentant ou en réduisant la proportion d'air frais à n'importe quel endroit souhaité de ladite chambre. Un tel ajustement local de la richesse du mélange détonant permet un contrôle de l'orientation de la poussée en sortie de la tuyère d'éjection, sans mise en oeuvre d'un système complexe d'orientation de flux.

En outre, le statoréacteur peut avantageusement comprendre au moins un circuit de refroidissement de ladite chambre de détonation dans lequel peut circuler du combustible avant son injection dans cette dernière. Ce circuit de refroidissement (encore désigné circuit régénératif) permet de prévaporiser le combustible avant son injection dans ladite chambre de détonation, de manière à obtenir des conditions de mélange et détonation satisfaisantes sans réalisation d'un prémélange.

De préférence, ledit circuit de refroidissement s'étend le long d'au moins une paroi latérale de ladite chambre de détonation, sur au moins une partie de sa longueur.

Ainsi, on peut refroidir la chambre de détonation à l'aide d'une partie ou de l'intégralité du combustible avant de l'injecter dans ladite chambre. Cela permet d'assurer la tenue thermique de la chambre de détonation tout en vaporisant au moins une partie du combustible à injecter au cours de sa circulation dans ledit circuit. Une injection directe du combustible prévaporisé - notamment lorsque celui-ci est stocké initialement à l'état liquide - garantit l'initiation et la stabilité de la détonation du mélange détonant combustible-air. On prévient ainsi tout problème lié aux délais d'évaporation des gouttes de combustibles et de réaction chimique.

Il est à noter qu'un tel circuit peut également participer au refroidissement de la paroi extérieure du statoréacteur.

Par ailleurs, ladite tuyère d'éjection est dépourvue de col sonique et est de préférence de faible longueur. En effet, l'écoulement étant déjà supersonique à l'aval de la chambre de détonation, la tuyère d'éjection sans col sonique permet d'obtenir la poussée désirée.

En outre, lesdits moyens d'injection de combustible peuvent comprendre au moins quatre ensembles d'alimentation (par exemple formés respectivement d'un secteur angulaire d'alimentation et d'une vanne correspondante) régulièrement répartis le long de la circonférence de ladite chambre de détonation, dont les débits en combustible associés sont soit identiques, soit différents, soit modifiables dans le temps indépendamment l'un de l'autre.

Ainsi, en contrôlant localement le débit d'arrivée de combustible, on peut modifier localement, au sein de ladite chambre, la variation de la richesse du mélange détonant combustible-air en augmentant ou en réduisant la proportion de combustible au niveau des ensembles d'alimentation. Un tel ajustement local de la richesse du mélange détonant permet un contrôle de l'orientation de la poussée en sortie de la tuyère d'éjection, sans mise en oeuvre d'un système complexe d'orientation de flux.

De préférence, lesdits ensembles d'alimentation diamétralement opposés sont deux à deux couplés et le débit d'alimentation en combustible desdits ensembles d'alimentation couplés est avantageusement contrôlé par l'intermédiaire d'un répartiteur à débit variable.

Ainsi, le répartiteur à débit variable permet d'augmenter le débit de combustible associé à un premier ensemble d'alimentation et de réduire le débit associé à un second ensemble d'alimentation, diamétralement opposé au premier ensemble auquel il est couplé. De cette façon, on peut obtenir une variation locale de la richesse du mélange détonant combustible-air, ce qui permet le contrôle de l'orientation de la poussée en sortie de la tuyère d'éjection.

En variante, un pilotage indépendant du débit de combustible de chacun des ensembles d'alimentation peut être mise en oeuvre.

De plus, dans un mode de réalisation particulier de l'invention :
- le statoréacteur de l'invention peut comprendre au moins deux chambres de détonation concentriques du type à onde de détonation continue aptes à être, en permanence, alimentées en air ; et
- lesdits moyens d'injection de combustible peuvent être formés pour injecter, en continu, du combustible directement dans au moins une desdites chambres de détonation concentriques.

Ainsi, on peut obtenir des performances satisfaisantes sur une large plage de richesse globale du mélange détonant combustible-air. En effet, le combustible peut être injecté :
- soit dans les deux chambres de détonation pour un fonctionnement du statoréacteur à forte richesse globale. Dans ce cas, un allumage séquentiel des chambres de détonation concentriques peut être mis en oeuvre pour réduire les chocs d'allumage ;
- soit dans une des deux chambres de détonation pour un fonctionnement du statoréacteur à richesse globale plus faible. Le flux supersonique de gaz chauds sortant de la chambre de détonation alimentée en combustible entraîne alors le flux froid subsonique sortant de l'autre chambre de détonation. Par exemple, lorsque le statoréacteur est monté sur le corps d'un missile, il est préférable d'alimenter la chambre de détonation interne - plutôt que la chambre de détonation externe - de manière à mieux alimenter le culot du corps central du missile afin d'en limiter la traînée et d'en réduire les signatures.

Il est bien évident que l'invention ne se limite pas à deux chambres de détonation concentriques, mais pourrait tout aussi bien mettre en oeuvre plus de deux chambres de détonation concentriques.

On notera également que ladite entrée d'air peut être axisymétrique, bidimensionnelle, ou bien encore tridimensionnelle.

Par ailleurs, la présente invention concerne également un engin volant qui comprend au moins un statoréacteur du type de celui décrit ci-dessus.
Les figures du dessin annexé feront bien comprendre comment l'invention peut être réalisée. Sur ces figures, des références identiques désignent des éléments semblables.
La figure 1 est une coupe schématique axiale partielle d'un premier exemple de statoréacteur conforme à la présente invention.
La figure 2 illustre dans une vue schématique agrandie en coupe, un exemple de moyen d'ajustement du débit d'air du statoréacteur de la figure 1.
La figure 3 est une coupe schématique axiale partielle d'un second exemple de statoréacteur conforme à la présente invention.
La figure 4 est une coupe schématique axiale partielle d'un troisième exemple de statoréacteur conforme à la présente invention.

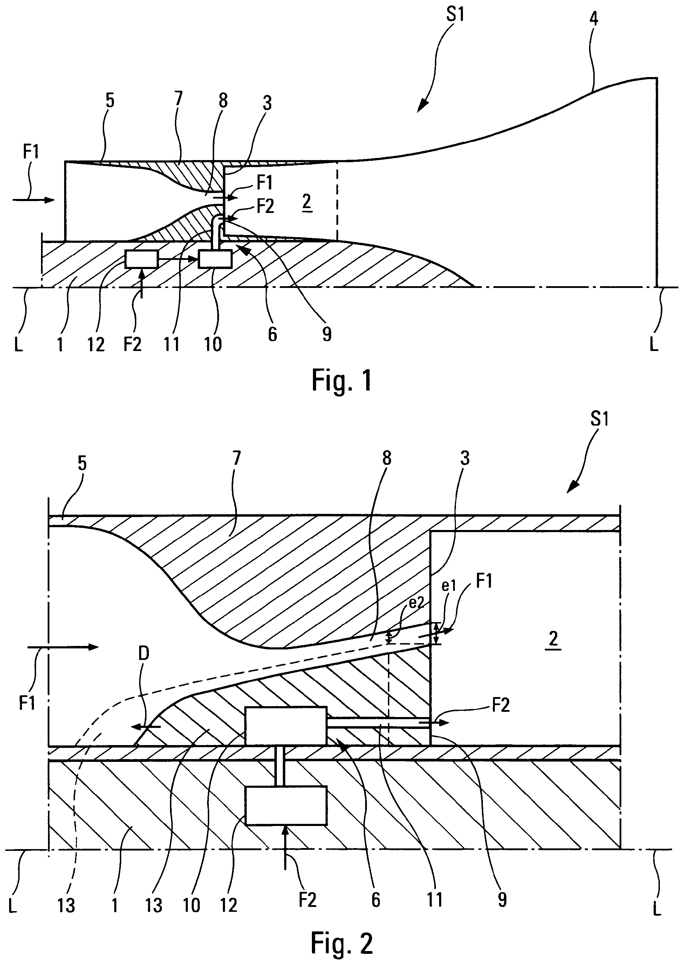

Sur la figure 1, on a représenté un premier exemple de réalisation d'un statoréacteur S1 à chambre de détonation, conforme à la présente invention, monté sur un engin volant 1. Il présente un axe longitudinal de symétrie L-L. Dans la suite, l'amont et l'aval sont définis par rapport au sens de l'écoulement de l'air.

Le statoréacteur S1, fonctionnant avec un mélange détonant combustible-air, comprend :
- une chambre de détonation annulaire circulaire 2 qui est équipée, à son extrémité amont, d'un fond d'injection d'air 3 et qui se termine, à son extrémité aval, par une tuyère d'éjection 4 dépourvue de col sonique. La chambre de détonation 2 est du type à onde de détonation continue ;
- une entrée d'air annulaire 5 qui est reliée à la chambre de détonation 3 pour pouvoir l'alimenter en air (lequel est symbolisé par la flèche F1); et
- des moyens 6 pour injecter, en continu, du combustible (symbolisé par la flèche F2) directement dans la chambre de détonation 2 juste en aval du fond d'injection d'air 3, par exemple au travers de celui-ci comme le montre la figure 1.

Lors du fonctionnement du statoréacteur S 1, l'injection de combustible F2 et l'injection d'air F1 dans la chambre de détonation 2 sont réalisées séparément l'une de l'autre, de façon permanente. Autrement dit, le mélange détonant frais combustible-air se forme dans la chambre de détonation 2. Selon l'invention, aucun prémélange n'est réalisé.

En outre, le statoréacteur S1 comprend un système d'injection d'air 7, annulaire et circulaire, qui est intercalé entre l'entrée d'air 5 et la chambre de détonation 2. Le système d'injection d'air 7 comprend par exemple une fente annulaire 8, qui forme un canal annulaire d'alimentation en air débouchant dans la chambre de détonation 2. Bien entendu, en variante, plusieurs fentes annulaires concentriques ou toute autre géométrie désirée de canal d'alimentation pourraient être mises en oeuvre.

Dans l'exemple de la figure 1, les moyens d'injection de combustible comprennent quatre ensembles d'alimentation 6 régulièrement répartis le long de la circonférence de la chambre de détonation 2. Chaque ensemble d'alimentation 6 est formé d'un secteur angulaire d'alimentation 9 (par exemple sous la forme d'une multiperforation du fond d'injection d'air 3) et d'une vanne 10, reliée à ce dernier par un canal 11.

Les ensembles d'alimentation 6 diamétralement opposés peuvent être deux à deux couplés et le débit d'alimentation en combustible desdits ensembles d'alimentation couplés est avantageusement contrôlé par l'intermédiaire d'un répartiteur à débit variable 12 relié aux vannes correspondantes 10 (une seule vanne est représentée sur la figure 1). Autrement dit, dans cet exemple, deux répartiteurs à débit variable 12 sont utilisés, chaque répartiteur 12 pilotant deux ensembles d'alimentation couplés 6.

Ainsi, le répartiteur à débit variable 12 permet d'augmenter le débit de combustible associé à un premier ensemble d'alimentation 6 et de réduire le débit associé à un second ensemble d'alimentation 6, diamétralement opposé au premier ensemble auquel il est couplé. On peut ainsi obtenir une variation locale de la richesse du mélange détonant combustible-air, ce qui permet le contrôle de l'orientation de la poussée en sortie de la tuyère d'éjection 4.

Par ailleurs, comme le montre la figure 2, le statoréacteur S1 comprend également des moyens 13 (non représentés sur la figure 1) pour contrôler localement le débit d'air frais entrant dans la chambre de détonation 4 par l'intermédiaire de la fente annulaire 8.

En particulier, les moyens de contrôle peuvent se présenter sous la forme d'un ou plusieurs tiroirs coulissants motorisés 13 aptes à réduire, sur une portion angulaire déterminée, l'épaisseur de la section annulaire transversale de la fente 8.

Sur la figure 2, on a ainsi représenté :
- en trait plein, une première position extrême d'un tiroir coulissant 13, dans laquelle la portion angulaire de la section annulaire transversale de la fente 8 associée présente une épaisseur maximale e1 ; et
- en trait interrompu, une seconde position extrême du tiroir 13, après déplacement vers l'amont de celui-ci (le déplacement étant symbolisé par la flèche D), dans laquelle la portion angulaire de la section annulaire transversale de la fente 8 associée présente une épaisseur minimale e2 (soit e2 < e1).

Ainsi, en contrôlant localement le débit d'arrivée d'air, il est possible de modifier localement, au sein de ladite chambre, la variation de la richesse du mélange détonant combustible-air en augmentant ou en réduisant la proportion d'air frais. Un tel ajustement local de la richesse du mélange détonant permet un contrôle de l'orientation de la poussée en sortie de la tuyère d'éjection.

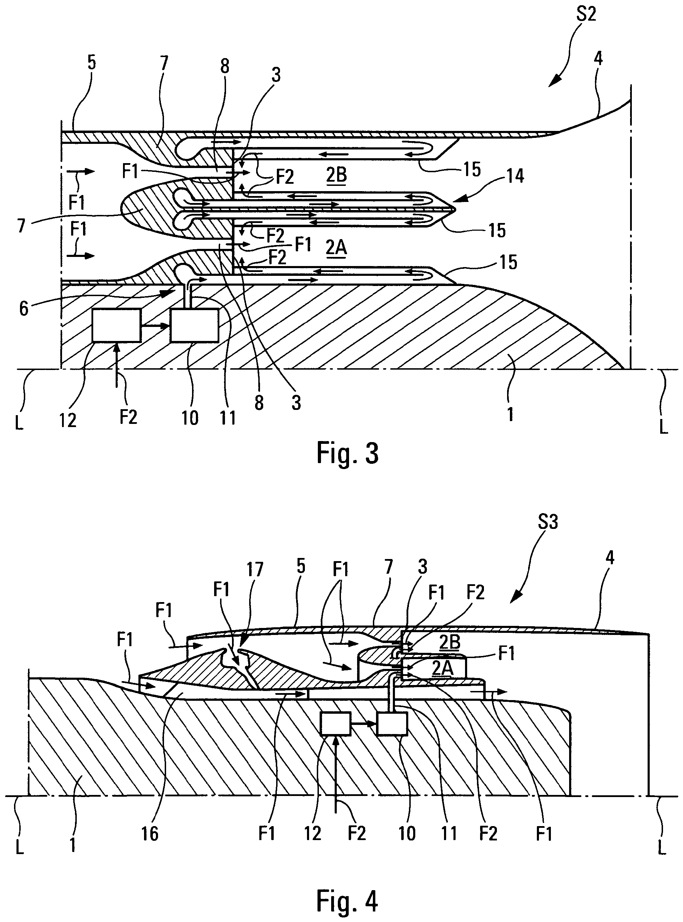

Par ailleurs, à la différence de l'exemple de la figure 1, le statoréacteur S2, illustré par la figure 3, comprend deux chambres de détonation annulaires concentriques 2A et 2B du type à onde de détonation continue qui sont alimentées, de façon permanente, en air F1 provenant de l'entrée d'air 5. Les chambres de détonation 2A et 2B - la chambre externe 2B entourant la chambre interne 2A - sont semblables à la chambre de détonation 2 décrite en relation avec la figure 1.

En outre, comme le montre la figure 3, un circuit de refroidissement 14 des chambres de détonation 2A et 2B - dans lequel peut circuler du combustible F2 avant son injection dans ces dernières - est intégré au statoréacteur S2. Le circuit de refroidissement 14 se présente sous la forme de conduits annulaires 15, indépendants les uns des autres.

Chaque conduit annulaire 15 s'étend le long d'une paroi latérale d'une des chambres de détonation 2A, 2B, sur la face de cette dernière qui est orientée vers la zone de détonation.

Chaque conduit 1 5 est en outre replié sur lui-même pour permettre une circulation du combustible de l'amont vers l'aval depuis le fond d'injection d'air 3, le long de la paroi latérale de la chambre de détonation 2A, 2B correspondante, puis de l'aval vers l'amont pour injecter du combustible F2, sous une forme prévaporisé, au voisinage du fond 3, comme l'illustre la figure 3.

Dans cet exemple, les moyens 6 d'injection de combustible dans les chambres de détonation 2A et 2B comprennent en outre les conduits annulaires 15. Ces derniers sont reliés aux vannes 10 par l'intermédiaire des canaux 11 correspondants.

Les moyens 6 d'injection sont formés pour injecter, en continu, du combustible directement dans au moins une des deux chambres de détonation concentriques 2A, 2B, par l'intermédiaire des conduits 15 correspondants.

Ainsi, le combustible peut être injecté :
- soit dans les deux chambres de détonation 2A et 2B pour un fonctionnement du statoréacteur S2 à forte richesse globale ;
- soit dans une des deux chambres de détonation 2A, 2B pour un fonctionnement du statoréacteur S2 à richesse globale plus faible.

Il est bien évident que le circuit de refroidissement 14 du statoréacteur S2 de la figure 3 pourrait également être mis en oeuvre sur le statoréacteur S1 de la figure 1.

Dans le troisième exemple de la figure 4, le statoréacteur S3 est semblable au statoréacteur S2 de la figure 3 (bien que le circuit de refroidissement 14 ne soit pas représenté pour des raisons de clarté), excepté par le fait qu'il comporte en outre un piège externe 16 permettant de capter la couche limite qui s'est développée sur le fuselage de l'engin volant 1 en amont de l'entrée d'air 5. On a ainsi une entrée d'air 5 très courte dont le prolongement constitue directement la tuyère d'éjection 4.

Le piège externe 16, se présentant sous la forme d'un passage annulaire, est intercalé entre l'entrée d'air 2 et le corps de l'engin volant 1 et s'étend longitudinalement le long de ce dernier pour déboucher dans la tuyère d'éjection 4.

Le statoréacteur S3 peut comprendre en outre un piège interne 17, ménagé dans la partie amont de la paroi latérale du piège externe 16, qui permet de capter une partie du flux reçu par l'entrée d'air 5 pour le réinjecter dans le passage annulaire du piège externe 16.

A la sortie de la chambre, le jet de gaz chauds en sortie des chambres de détonation 2A et 2B entraîne plus ou moins le flux d'air piégé par les pièges externe et interne 16 et 17. Quelle que soit l'intensité de l'effet d'entraînement (faible ou élevée), la traînée liée à ces pièges 16 et 17 est fortement limitée en utilisant leurs flux d'air pour alimenter le culot du corps central de l'engin volant 1.

De plus, une injection auxiliaire d'oxygène pur dans le flux d'air traversant l'entrée d'air 5 ou le système d'injection d'air 7 peut être réalisée pour doper ledit flux d'air F1 et assurer un fonctionnement satisfaisant à Mach réduit.

Ainsi, grâce à l'invention, on obtient un statoréacteur à chambre de détonation très court, en comparaison des statoréacteurs à chambre de détonation connus, :
- qui dégage toute la partie avant de l'engin volant 1 (pas d'entrée d'air ventrale ou latérale longue qui impose souvent des conceptions mécaniques compliquées) ;
- qui peut fonctionner à richesse 1 (alors qu'il est difficile de faire fonctionner un statoréacteur classique à hydrocarbure à richesse brûlée supérieure à 0,75), ce qui, ajouté à la meilleure performance thermodynamique, permet de réduire très sensiblement le débit d'air capté et donc la taille de l'entrée d'air pour produire une poussée équivalente; et
- qui peut fonctionner dès Mach 1,2 grâce au cycle thermodynamique qui augmente la pression dans la ou les chambres de détonation.

## Revendications

1. Statoréacteur fonctionnant avec un mélange détonant combustible-air et comprenant :
- au moins une chambre de détonation (2, 2A, 2B) qui est équipée, à son extrémité amont, d'un fond d'injection d'air (3) et qui se termine, à son extrémité aval, par une tuyère d'éjection (4) ;
- au moins une entrée d'air (5) reliée à ladite chambre de détonation (2, 2A, 2B) pour pouvoir l'alimenter en air (F1); et
- des moyens (6) pour injecter du combustible dans ladite chambre de détonation (2, 2A, 2B),
**caractérisé**
- **en ce que** ladite chambre détonation (2, 2A, 2B) est annulaire et du type à onde de détonation continue ;
- **en ce que** lesdits moyens d'injection de combustible (6) sont formés pour injecter, en continu, du combustible (F2) directement dans ladite chambre de détonation juste en aval dudit fond d'injection d'air ; et
- **en ce que** l'injection de combustible et l'injection d'air dans ladite chambre de détonation sont réalisées séparément l'une de l'autre, de façon permanente au cours du fonctionnement dudit statoréacteur (S1, S2, S3).

2. Statoréacteur selon la revendication 1,
**caractérisé en ce qu'**il comprend en outre un système d'injection d'air (7) qui est intercalé entre ladite entrée d'air (5) et ladite chambre de détonation (2, 2A, 2B) et qui comprend au moins un canal (8), par exemple sous la forme d'une fente annulaire, débouchant dans ladite chambre de détonation pour l'alimenter en air.

3. Statoréacteur selon l'une des revendications 1 ou 2,
**caractérisé en ce qu'**il comprend des moyens (13) pour contrôler localement le débit d'air frais entrant dans ladite chambre de détonation (2, 2A, 2B).

4. Statoréacteur selon l'une des revendications 1 à 3,
**caractérisé en ce qu'**il comprend au moins un circuit de refroidissement (14) de ladite chambre de détonation (2A, 2B) dans lequel peut circuler du combustible (F2) avant son injection dans cette dernière.

5. Statoréacteur selon la revendication précédente,
**caractérisé en ce que** ledit circuit de refroidissement (14) s'étend le long d'au moins une paroi latérale de ladite chambre de détonation (2A, 2B), sur au moins une partie de sa longueur.

6. Statoréacteur selon l'une des revendications 1 à 5,
**caractérisé en ce que** ladite tuyère d'éjection (4) est dépourvue de col sonique.

7. Statoréacteur selon l'une des revendications 1 à 6,
**caractérisé en ce que** lesdits moyens d'injection de combustible comprennent au moins quatre ensembles d'alimentation (6) régulièrement répartis le long de la circonférence de ladite chambre de détonation (2, 2A, 2B), dont les débits en combustible associés sont soit identiques, soit différents, soit modifiables dans le temps indépendamment l'un de l'autre.

8. Statoréacteur selon la revendication précédente,
**caractérisé :**
- **en ce que** lesdits ensembles d'alimentation (6) diamétralement opposés sont deux à deux couplés ; et
- **en ce que** le débit d'alimentation en combustible desdits ensembles d'alimentation couplés est contrôlé par l'intermédiaire d'un répartiteur à débit variable (12).

9. Statoréacteur selon l'une des revendications 1 à 8,
**caractérisé :**
- **en ce qu'**il comprend au moins deux chambres de détonation concentriques (2A, 2B) du type à onde de détonation continue aptes à être, en permanence, alimentées en air ; et
- **en ce que** lesdits moyens d'injection de combustible (6) sont formés pour injecter, en continu, du combustible (F2) directement dans au moins une desdites chambres de détonation concentriques (2A, 2B).

10. Statoréacteur selon l'une des revendications 1 à 9,
**caractérisé en ce que** ladite entrée d'air (5) est axisymétrique.

11. Engin volant,
**caractérisé en ce qu'**il comprend au moins un statoréacteur (S1, S2, S3) du type de celui spécifié sous l'une des revendications 1 à 10.

## Patentansprüche

1. Staustrahltriebwerk, das mit einem explosiven Treibstoff-Luftgemisch arbeitet und umfasst:
- mindestens eine Detonationskammer (2, 2A, 2B), die an ihrem Stromaufwärts-Ende mit einem Luftinjektionsboden (3) ausgestattet ist und die an ihrem Stromabwärts-Ende mit einer Ausströmdüse (4) abschließt;
- mindestens einen Lufteinlass (5), der mit der Detonationskammer (2, 2A, 2B) verbunden ist, um sie mit Luft (F1) zu versorgen; und
- Mittel (6) zum Einspritzen von Treibstoff in die Detonationskammer (2, 2A, 2B),
**dadurch gekennzeichnet**
- **dass** die Detonationskammer (2, 2A, 2B) ringförmig ist und vom kontinuierlichen Detonationswellen-Typ ist;
- **dass** die Treibstoff-Einspritzmittel (6) dazu ausgebildet sind, kontinuierlich Treibstoff (F2) direkt in die Detonationskammer direkt stromabwärts des Luftinjektionsbodens einzuspritzen; und
- **dass** die Einspritzung des Treibstoffs und die Injektion von Luft in die Detonationskammer separat voneinander verwirklicht sind, und zwar auf eine permanente Weise während des Betriebs des Staustrahltriebwerks (S1, S2, S3).

2. Staustrahltriebwerk nach Anspruch 1,
**dadurch gekennzeichnet, dass** es weiter ein Luftinjektionssystem (7) umfasst, das zwischen den Lufteinlass (5) und die Detonationskammer (2, 2A, 2B) zwischengeschaltet ist und mindestens einen Kanal (8) umfasst, beispielsweise in Form eines Ringschlitzes, der in die Detonationskammer mündet, um ihr Luft zuzuführen.

3. Staustrahltriebwerk nach einem der Ansprüche 1 oder 2,
**dadurch gekennzeichnet, dass** sie Mittel (13) zum lokalen Steuern des Frischluftstroms umfasst, der in die Detonationskammer (2, 2A, 2B) eintritt.

4. Staustrahltriebwerk nach einem der Ansprüche 1 bis 3,
**dadurch gekennzeichnet, dass** sie mindestens einen Kühlkreis (14) der Detonationskammer (2A, 2B) umfasst, in welchem der Treibstoff (F2) vor seiner Einspritzung in die letztgenannte zirkulieren kann.

5. Staustrahltriebwerk nach dem vorhergehenden Anspruch,
**dadurch gekennzeichnet, dass** sich der Kühlkreis (14) entlang mindestens einer Seitenwand der Detonationskammer (2A, 2B) auf zumindest einem Teil seiner Länge erstreckt.

6. Staustrahltriebwerk nach einem der Ansprüche 1 bis 5,
**dadurch gekennzeichnet, dass** die Ausströmdüse (4) schallkragenlos ist.

7. Staustrahltriebwerk nach einem der Ansprüche 1 bis 6,
**dadurch gekennzeichnet, dass** die Treibstoff-Einspritzmittel mindestens vier Zufuhrsätze (6) umfassen, die entlang des Umfangs der Detonationskammer (2, 2A, 2B) verteilt sind, deren zugeordnete Treibstoffströme entweder identisch oder unterschiedlich oder zeitlich unabhängig voneinander veränderbar sind.

8. Staustrahltriebwerk nach dem vorhergehenden Anspruch,
**dadurch gekennzeichnet:**
- **dass** die Zufuhrsätze (6), die diametral gegenüberliegen, paarweise gekoppelt sind; und
- **dass** der Treibstoff-Zufuhrstrom der gekoppelten Zufuhrsätze unter Zwischenschaltung eines Verteilers (12) mit variablem Strom gesteuert wird.

9. Staustrahltriebwerk nach einem der Ansprüche 1 bis 8,
**dadurch gekennzeichnet:**
- **dass** es mindestens zwei konzentrische Detonationskammern (2A, 2B) vom kontinuierlichen Detonationswellen-Typ umfasst, die dazu angepasst sind, permanent mit Luft versorgt zu werden; und
- **dass** die Treibstoff-Einspritzmittel (6) zum kontinuierlichen Einspritzen von Treibstoff (F2) direkt in mindestens eine der konzentrischen Detonationskammern (2A, 2B) ausgebildet sind.

10. Staustrahltriebwerk nach einem der Ansprüche 1 bis 9,
**dadurch gekennzeichnet, dass** der Lufteinlass (5) axialsymmetrisch ist.

11. Fluggerät,
**dadurch gekennzeichnet, dass** es mindestens ein Staustrahltriebwerk (S1, S2, S3) vom Typ aufweist, der in einem der Ansprüche 1 bis 10 spezifiziert ist.

## Claims

1. Ramjet which operates with an explosive fuel-air mixture and comprises:
- at least one detonation chamber (2, 2A, 2B) which is equipped, at its upstream end, with an air injection base (3) and which terminates, at its downstream end, with an exhaust nozzle (4);
- at least one air intake (5) connected to said detonation chamber (2, 2A, 2B) in order to be able to supply it with air (F1); and
- means (6) for injecting fuel into said detonation chamber (2, 2A, 2B),
**characterised in that**:
- said detonation chamber (2, 2A, 2B) is annular and of the continuous detonation wave type;
- said fuel injection means (6) are formed for continuously injecting fuel (F2) directly into said detonation chamber just downstream of said air injection base; and
- the injection of fuel and the injection of air into said detonation chamber are carried out continuously separately from one another in the course of operation of said ramjet (S1, S2, S3).

2. Ramjet according to claim 1,
**characterised in that** it also comprises an air injection system (7) which is interposed between said air inlet (5) and said detonation chamber (2, 2A, 2B) and which comprises at least one channel (8), for example in the form of an annular slot, which opens into said detonation chamber in order to supply it with air.

3. Ramjet according to either claim 1 or claim 2,
**characterised in that** it comprises means (13) for local control of the flow of fresh air entering said detonation chamber (2, 2A, 2B).

4. Ramjet according to any one of claims 1 to 3,
**characterised in that** it comprises at least one circuit (14) for cooling of said detonation chamber (2A, 2B) in which fuel (F2) can circulate before its injection therein.

5. Ramjet according to the preceding claim,
**characterised in that** said cooling circuit (14) extends along at least one side wall of said detonation chamber (2A, 2B), over at least a portion of the length thereof.

6. Ramjet according to any one of claims 1 to 5,
**characterised in that** said exhaust nozzle (4) has no sonic throat.

7. Ramjet according to any one of claims 1 to 6,
**characterised in that** said fuel injection means comprise at least four supply units (6) regularly distributed along the circumference of said detonation chamber (2, 2A, 2B), of which the associated fuel flows are either identical, or different, or modifiable over time independently of one another.

8. Ramjet according to the preceding claim,
**characterised in that**:
- said diametrically opposite supply units (6) are coupled two by two; and
- the fuel supply flow of said coupled supply units is controlled by means of a variable-flow distributor (12).

9. Ramjet according to any one of claims 1 to 8,
**characterised in that**:
- it comprises at least two concentric detonation chambers (2A, 2B) of the continuous detonation wave type capable of being continuously supplied with air; and
- said fuel injection means (6) are formed for continuously injecting fuel (F2) directly into at least one of said concentric detonation chambers (2A, 2B).

10. Ramjet according to any one of claims 1 to 9,
**characterised in that** said air intake (5) is axially symmetrical.

11. Aircraft,
**characterised in that** it comprises at least one ramjet (S1, S2, S3) of the type specified in any one of claims 1 to 10.
